# EUROPEAN PATENT APPLICATION

(11) **EP 4 746 340 A1**
(43) Date of publication of application: **20.05.2026**
(21) Application number: 24843434.2
(22) Date of filing: 12.07.2024
(51) Int. Cl.: H04L 9/08

(54) **METHOD FOR DETERMINING EXISTENCE OF WIRETAPPER ON QUANTUM CHANNEL OF QUANTUM CRYPTOGRAPHY COMMUNICATION SYSTEM BY USING TDC AND QUANTUM CRYPTOGRAPHIC KEY DISTRIBUTION APPARATUS THEREFOR**

(30) Priority: 14.07.2023 KR 20230091545
(71) Applicant: SDT Inc., Seoul 06211 (KR)
(72) Inventor: YUNE, Jiwon, Gwacheon-si, Gyeonggi-do 13839 (KR); PARK, Byung Kwon, Suwon-si, Gyeonggi-do 16238 (KR)
(74) Representative: Manasse, Uwe
(86) International application number: PCT/KR2024/009986
(87) International publication number: WO 2025/018716

(57) **Abstract**

A receiver device for a quantum key distribution system is disclosed, comprising: a detection device configured to detect a quantum signal transmitted through a quantum channel and output a data signal corresponding to the detected quantum signal; and a TDC configured to measure a generation time difference between a generation time of a first encoding pulse included in the data signal and a generation time of a first reference pulse included in a predetermined reference timing signal. If the measured generation time difference deviates from a predetermined threshold range, it is determined that an eavesdropper is present on the quantum channel.

## Description

### Technical Field

The present invention relates to quantum key distribution technology, and more particularly, to a technology for determining the presence of an eavesdropper on a quantum channel using a TDC (Time to Digital Converter).

### Background Art

Quantum cryptography technology is a field of quantum information technology. Quantum cryptography technology is a digital information technology using the principles of quantum physics and is a physical layer security technology for communication networks. Quantum cryptography technology is secure because its security is based on the principles of quantum mechanics, making eavesdropping and wiretapping impossible, and its security is absolutely guaranteed. Quantum cryptography technology can be implemented using existing installed optical fiber facilities, making large-scale commercialization possible.

Unlike asymmetric public key cryptography systems such as RSA cryptography, symmetric cryptography systems that use one-time pads, where sender and receiver share one-time pads and use them as encryption keys, guarantee absolute security. Quantum cryptography technology is a technology that safely distributes such one-time pads in real-time between a sender (transmitter) and a receiver (receiver) based on quantum physics principles such as quantum non-cloning property, and is also referred to as "Quantum Key Distribution (QKD)" technology.

Generally, quantum cryptography uses two communication channels: a quantum channel (secret channel) that transmits quantum states, and a classical channel (public channel) that is fully open to the outside, including eavesdroppers. That is, the quantum channel is a communication channel that is the core of quantum cryptography and is kept completely secret due to the principle of quantum non-cloning, while the classical channel is a communication channel used by the sender (Alice) and the receiver (Bob) to publicly compare randomly selected bases or publicly compare parts of the generated encryption keys to detect eavesdroppers. It refers to existing digital optical transmission channels or wireless communication channels. In quantum cryptography, the classical channel is in principle considered a channel where eavesdroppers can freely eavesdrop or wiretap. The classical channel is necessary for quantum key distribution itself, such as comparing bases between the sender (Alice) and the receiver (Bob), but it is also absolutely necessary for the function of publicly authenticating each other. That is, if there is no classical channel, the encryption key may be leaked by a so-called impersonation attack in which an eavesdropper impersonates the sender (Alice) or the receiver (Bob) in the middle. As such, the classical channel or public channel is a core element of quantum cryptography and must be considered importantly when implementing a practical quantum cryptography system, but it is

In that existing developed technology is used, the quantum cryptographic communication channel referred to in this specification refers to a quantum channel used for quantum state transmission. There are two ways to physically implement quantum cryptographic communication channels: using optical fibers (wired) and distributing encryption keys through the atmosphere (wireless). The optical fiber method is suitable for implementing long-distance quantum cryptography channels because if single-mode optical fibers, which are standardly used in existing optical communications, are used, the spatial mode is very well maintained and the transmission loss in the 1550nm band is very low at around 0.2dB/km.

Encryption keys for quantum cryptography can be implemented in various ways, such as coding using the polarization of light, phase coding, frequency coding, and coding using continuous variables. Coding technology using the polarization or phase of light is subject to polarization or optical path shaking due to temperature or surrounding environment, so technology to continuously compensate for this is additionally required.

BB84 protocol, a quantum cryptography protocol that uses two bases (basis) of X-basis and Y-basis, uses four quantum states that make up two bases (basis). For example, it uses four polarization states of a single photon.

A common method to share encryption keys between the sender (Alice) and the receiver (Bob) and to detect the presence of an eavesdropper (Eve) is as follows.

That is, in the first step, the sender (Alice) randomly selects one of the X-basis or Y-basis.

In the second step, the sender (Alice) randomly chooses one of the two quantum states (encryption key values) of the selected basis, i.e., 0 or 1, and sends it to the receiver (Bob).

In the third step, the receiver (Bob) who receives the quantum state also randomly selects one of the two bases.

In the fourth step, the receiver (Bob) measures the received quantum state using the selected basis.

In the fifth step, after the receiver (Bob)'s measurement is completed, the sender (Alice) and the receiver (Bob) publicly disclose the bases they randomly selected to each other. If the basis selected by the sender (Alice) and the basis selected by the receiver (Bob) are the same, the result measured by the receiver (Bob) matches the quantum state randomly chosen by the sender (Alice), and thus the two users have the same encryption key (sifted key).

If an eavesdropper (Eve) attempts to eavesdrop in the middle, errors will be created in the encryption key values obtained by the two users (Alice and Bob) due to the basic principle of quantum mechanics, and the sender (Alice) and the receiver (Bob) disclose a part of the generated key to each other and calculate the error rate to know the presence of the eavesdropper (Eve).

The eavesdropping methods that an eavesdropper (Eve) can perform can be largely divided into two types: individual attack (incoherent attack), which attempts to access only one qubit at a time, and joint attack (coherent attack), which accesses several qubits at once to obtain information.

An example of an individual attack method is the intercept-resend attack. In this method, the eavesdropper (Eve) intercepts the qubits that the sender (Alice) sends to the receiver (Bob), performs a measurement of her choice, and then sends the receiver (Bob) a qubit in a state that is advantageous to the eavesdropper (Eve). The basis that the eavesdropper (Eve) measures can be chosen arbitrarily from among the two bases of the BB84 protocol, or it can be measured with a basis intermediate between the two bases.

Another example of an individual attack method is the cloning attack (symmetric individual attack). This is a method of performing quantum cloning on the qubits being transmitted, and although complete cloning is impossible in quantum mechanics (no cloning theorem), it is a form of attack that obtains some information about the encryption key.

These attack methods are attacks on perfect quantum cryptography devices, and they are things that are detected by users by causing errors in the encryption keys of the sender (Alice) and the receiver (Bob). In addition to these methods, there are also attack methods that exploit the vulnerabilities of devices used in quantum cryptography systems.

### Detailed Description of the Invention

### Technical Problem

According to the prior art, in order to detect eavesdroppers, the error rate present in the generated encryption key is used, so the presence of an eavesdropper or attacker on the quantum channel cannot be detected in real time. In the present invention, the reception timing of the transmitted qubits is precisely measured, and based on the difference between the measured reception timing and the reference timing, it is intended to provide a technology that can detect the presence of an attacker in real time.

### Means for Solving the Problem

According to an aspect of the present invention, a receiver device for a quantum key distribution system is provided, comprising: a detection device (260) configured to detect a quantum signal transmitted through a quantum channel and output a data signal (Sd) corresponding to the detected quantum signal; and a TDC (250) configured to measure a time difference between a generation time of a first encoding pulse included in the data signal and a generation time of a first reference pulse included in a predetermined reference timing signal, wherein if the measured time difference deviates from a predetermined threshold range, it is determined that an eavesdropper is present on the quantum channel.

Herein, the reference timing signal (Srt) may be a pulse train signal synchronized with the quantum signal output by the transmitter device (100).

Herein, the reference timing signal (Srt) may be a pulse train signal having the same period as the generation cycle of the quantum signal output by the transmitter device (100).

Herein, the generation time difference may be a time difference between a rising edge of the first encoding pulse and a rising edge of the first reference pulse.

Herein, the first encoding pulse may be an encoding pulse closest to the first reference pulse in the time axis among a plurality of encoding pulses included in the data signal (Sd).

Herein, the TDC may include: a first delay line part (20) to which an input pulse having a width equal to the time difference between the first generation time of the first reference pulse and the second generation time of the first encoding pulse is input; and a calculation part (60) configured to determine the generation time difference using a thermometer code output by the first delay line part (20).

Herein, the TDC further includes a code conversion part (30) configured to convert and output the order of elements of the thermometer code, and the calculation part is configured to determine the generation time difference using the converted code output by the code conversion part, and the converted code is obtained by arranging the order of elements of the thermometer code according to a predetermined reference, and the predetermined reference is a data path delay from an output node of the input pulse to each output node of a plurality of flip-flops (FF) included in the first delay line part.

Herein, the TDC is implemented by any one device among FPGA (Field Programmable Gate Array), ASIC (Application Specific Integrated Circuit), and IC (Integrated Circuit), and any one of the devices may be programmed to include the first delay line part and the calculation part.

Herein, the TDC further includes a second delay line part to which the input pulse is input; and the code conversion part is configured to generate the converted code by arranging and merging the elements of the thermometer code output by the first delay line part and the elements of the thermometer code output by the second delay line part according to a predetermined second reference, and the predetermined second reference is a data path delay from the output node of the input pulse to each output node of a plurality of flip-flops included in the first delay line part and the second delay line part.

Herein, the TDC is configured to use a clock signal (clk) having a period shorter than the generation cycle of the quantum signal output by the transmitter device, and the TDC includes: an input signal generation part (10) configured to generate the input pulse having a width equal to the time difference between the rising edge generation time of the first reference pulse and the rising edge generation time of the first encoding pulse; a clock pulse count part (40) configured to count the number of clock pulses of the clock signal generated during the sustainment period of the input pulse; and the calculation part configured to determine the value of the generation time difference using a first thermometer code (TC1) output by the code conversion part at the rising edge time of the first clock pulse among the generated clock pulses, a second thermometer code (TC2) output by the code conversion part at the rising edge time of the clock pulse generated immediately after the last clock pulse among the generated clock pulses, and the number of counted clock pulses.

According to another aspect of the present invention, a receiver device for a quantum key distribution system is provided, comprising: a detection device configured to detect a quantum signal transmitted through a quantum channel and output a data signal (Sd) corresponding to the detected quantum signal; and a TDC (250) configured to measure time differences between generation times of reference pulses included in a predetermined reference timing signal and generation times of encoding pulses included in the data signal, wherein if a variance of the measured time differences deviates from a predetermined threshold range, it is determined that an eavesdropper is present on the quantum channel.

Herein, the reference timing signal (Srt) may be a pulse train signal having the same period as the generation cycle of the quantum signal output by the transmitter device (100).

Herein, the generation time of an arbitrary first encoding pulse among the encoding pulses may be compared with the generation time of a first reference pulse closest to the first encoding pulse in the time axis among a plurality of reference pulses included in the data signal (Sd).

Herein, the TDC may include: a first delay line part (20) to which an input pulse having a width equal to the time difference between the first generation time of the first reference pulse and the second generation time of the first encoding pulse is input; and a calculation part (60) configured to determine the generation time difference using a thermometer code output by the first delay line part (20).

According to another aspect of the present invention, a receiver device for a quantum key distribution system is provided, comprising: a detection device configured to detect a quantum signal detected through a quantum channel and output a data signal corresponding thereto; and a TDC configured to measure a time difference between a first generation time of a first reference pulse included in a reference timing signal and a second generation time of a first encoding pulse included in the data signal, wherein if a variance of the measured time differences deviates from a predetermined threshold range, it is determined that an eavesdropper is present on the quantum channel. Herein, the TDC includes: a delay line part to which the input pulse having a width equal to the time difference is input; and a code conversion part configured to generate a converted code by arranging elements of a thermometer code output by the delay line part according to a data path delay from an output node of the input pulse to each output node of a plurality of flip-flops included in the delay line part. Herein, the receiver device is configured to determine the time difference using the generated converted code, and if the measured time difference deviates from a predetermined threshold range, it is determined that an eavesdropper is present on the quantum channel.

Herein, the TDC may further include a calculation part configured to determine the time difference using the generated converted code.

Herein, the TDC may further include a second delay line part to which the input pulse is input. And the code conversion part is configured to generate the converted code by arranging and merging the elements of the thermometer code output by the delay line part and the elements of the thermometer code output by the second delay line part according to the data path delay from the output node of the input pulse to each output node of a plurality of flip-flops included in the delay line part and the second delay line part.

Herein, the TDC may be configured to use a clock signal having a period shorter than the generation cycle of the quantum signal output by the transmitter device. And the TDC includes: an input signal generation part configured to generate the input pulse having a width equal to the time difference between the rising edge generation time of the first reference pulse and the rising edge generation time of the first encoding pulse; and the

clock pulse count part configured to count the number of clock pulses of the clock signal generated during the sustainment period of the input pulse; may further be included. Herein, the calculation part is configured to determine the value of the time difference using a first thermometer code (TC1) output by the code conversion part at the rising edge time of the first clock pulse among the generated clock pulses, a second thermometer code (TC2) output by the code conversion part at the rising edge time of the clock pulse generated immediately after the last clock pulse among the generated clock pulses, and the number of counted clock pulses.

According to another aspect of the present invention, a receiver device for a quantum key distribution system is provided, comprising: a detection device configured to detect a quantum signal detected through a quantum channel and output a data signal corresponding thereto; and a TDC configured to measure time differences between first generation times of first reference pulses included in a reference timing signal and second generation times of first encoding pulses included in the data signal, wherein if a variance of the measured time differences deviates from a predetermined threshold range, it is determined that an eavesdropper is present on the quantum channel. Herein, the TDC includes: a delay line part to which an input pulse having a width equal to each of the time differences is input; and a code conversion part configured to generate a converted code by arranging elements of a thermometer code output by the delay line part according to a data path delay from an output node of the input pulse to each output node of a plurality of flip-flops included in the delay line part.

### Effect of the Invention

According to the present invention, by precisely measuring the reception timing of transmitted qubits and using the difference between the measured reception timing and the reference timing as a basis, it is possible to provide a technology that can detect the presence of an attacker in real time.

### Brief Description of Drawings

Figure 1 is a configuration example of a quantum key distribution system provided according to an embodiment.
Figure 2 is a configuration example of a quantum key distribution system provided according to an embodiment of the present invention.
Figure 3 is a diagram for explaining the interaction of the TDC, detection device, and receiver-side control unit shown in Figure 2.
Figure 4 illustrates a situation where an eavesdropper present on the quantum channel of a quantum key distribution system intercepts qubits sent by the sender to the receiver, performs a measurement of their choice, and then sends qubits in a state advantageous to the eavesdropper to the receiver.
Figure 5 shows an example of a data signal generated by the detection device of the receiver device detecting quantum signals retransmitted by an eavesdropper.
Figure 6 illustrates a concept of measuring the time difference between pulses of a predetermined reference timing signal provided by the receiver-side control unit and pulses of a data signal output by the detection device, in the receiver's TDC provided according to an embodiment of the present invention.
Figure 7 is a diagram illustrating a situation where the roles of the start signal and the end signal are reversed in the configuration shown in Figure 6.
Figure 8 is a flowchart illustrating a method for determining the presence of an eavesdropper on a quantum channel provided according to an embodiment of the present invention.
Figure 9 is a flowchart illustrating a method for determining the presence of an eavesdropper on a quantum channel provided according to another embodiment of the present invention.
Figure 10 shows a configuration diagram of an FPGA implementing the TDC according to an embodiment of the present invention.
Figure 11 is a diagram for explaining an input pulse input to the first delay line part of the FPGA according to an embodiment of the present invention.
Figure 12 shows a configuration of the first delay line part according to an embodiment of the present invention.
Figure 13 is a diagram for explaining the indices of the buffers in Figure 12.
Figure 14 is a table for explaining data path delays.
Figures 15a and 15b illustrate a parallel configuration of a plurality of delay line parts according to an embodiment of the present invention.
Figure 16a shows a configuration of the first delay line part and the second delay line part of Figure 15b, and Figure 16b is for explaining the operation of the code conversion part when two delay line parts are used according to an embodiment of the present invention.
Figure 17 is a graph of delay according to whether or not the code conversion part is applied, according to an embodiment of the present invention.
Figure 18 is a diagram for explaining the array criteria of flip-flop output values and the increase value of the number of taps in Figure 17 according to an embodiment of the present invention.

### Mode for Carrying Out the Invention

Hereinafter, embodiments of the present invention will be described with reference to the accompanying drawings. However, the present invention is not limited to the embodiments described in this specification and can be implemented in various other forms.

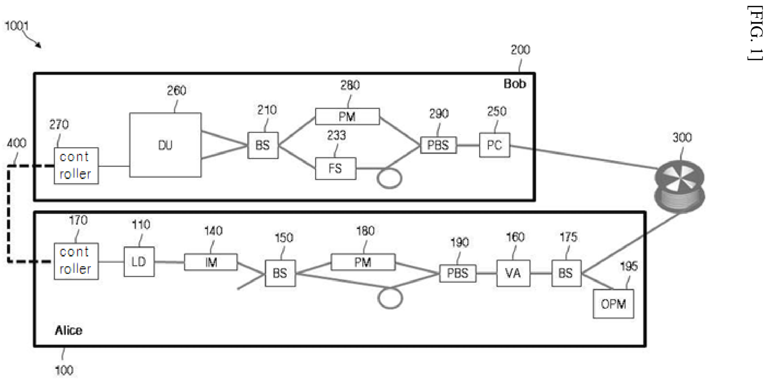

Figure 1 shows a configuration example of a quantum key distribution system provided according to an embodiment.

The quantum key distribution system (1001) may include a sender (Alice) (100), a receiver (Bob) (200), a quantum channel (300), and a public channel (400).

The sender (Alice) (100) includes a laser diode (LD) (110), an intensity modulator (IM) (140), an unbalanced Mach-Zehnder interferometer, a fiber-integrated beam splitter (BS; beam-splitter) (150), a phase modulator (PM; phase modulator) (180), a final polarization BS (PBS; polarizing BS) (190), a variable attenuator (VA; variable attenuator) (160), a second beam splitter (175), and an optical power meter (OPM; optical power meter) (195).

The laser diode (LD) (110) can emit light pulses of, for example, 1550nm at a frequency of 1GHz.

The intensity modulator (IM) (140) and the unbalanced Mach-Zehnder interferometer transmit the emitted light pulses to the fiber-integrated beam splitter (BS) (150).

One of the outputs of the beam splitter (BS) (150) reaches the final polarization BS (PBS) (190) through a first path passing through the phase modulator (PM) (180), and the other reaches the final polarization BS (PBS) (190) through a second path longer than the first path.

The variable attenuator (VA) (160) sets the pulse intensity of the signal output by the final polarization BS (PBS) (190) to a desired level.

The optical power meter (OPM) (195) measures the total flux of the optical fiber observed through the second beam splitter (175) and adjusts the VA (160) in real time to keep it constant.

The receiver (200) includes a polarization controller (PC; polarization control) (250), a second interferometer, a receiver-side polarization BS (PBS) (290), an optical fiber stretcher (FS; fibre-stretcher) (233), a receiver-side phase modulator (PM) (280), a final BS (210), and a detection unit (DU; detection unit) (260). The detection unit (DU) (260) may include a sensor that detects single photons. The detection device receives optical signals and outputs electrical signals.

The signal output from the sender (Alice) (100) passes through an optical fiber spool (300), which is a quantum channel, and passes through a second interferometer and polarization control (PC) (250) having a configuration consistent with the sender (Alice) (100).

In one arm (arm), the optical fiber stretcher (FS) (233) is used to match the arm lengths between two distant interferometers to create interference in the final BS (210).

Pulses output from the final BS (210) are eventually measured by the detection unit (DU). The final BS (210) receives a portion of photons that have passed through the receiver-side phase modulator (280) and a portion of photons that have passed through the optical fiber stretcher (233). The final BS (210) has a first output port and a second output

port, and when portions of photons interfere constructively with each other, photons are output through the first output port, and when they interfere destructively, photons can be output through the second output port. The detection device (260) has a first input port and a second input port. The first output port of the final BS (210) is connected to the first input port of the detection unit (DU), and the second output port of the final BS (210) is connected to the second input port of the detection unit (DU). A photon representing one qubit is input to only one of the first input port and the second input port of the detection device (260). The detection device (260) determines that a bit of '1' is encoded when photons are input through the first input port, and determines that a bit of '0' is encoded when photons are input through the second input port.

The detection device (260) can output a digital signal (Sd) representing the binary value decoded from the corresponding photon at the time when photons are detected. The digital signal (Sd) is provided to the receiver-side control unit (270).

The transmitter-side control unit (170) included in the sender (100) has a function of randomly selecting a basis and binary information to be encoded used to encode each qubit transmitted by the sender (100).

The receiver-side control unit (270) included in the receiver (200) has a function of randomly selecting a basis used to decode each received qubit.

The transmitter-side control unit (170) and the receiver-side control unit (270) can exchange predetermined information through a public channel (400) through a communication unit (not shown). The predetermined information may include information about a series of bases used by the transmitter-side control unit (170) and the receiver-side control unit (270).

The transmitter-side control unit (170) and the receiver-side control unit (270) may be configured as a single device with a single package, or may be configured as a set of multiple devices. The set of multiple devices may include a high-speed FPGA, memory, and RAM.

The sender (100) and the receiver (200) can share information about the transmission cycle of a series of qubits. In addition, the receiver (200) can acquire information about the timing or time interval when the sender (100) starts to transmit a series of qubits, so the receiver (200) can prepare to receive the transmitted qubits. And the receiver (200) can synchronize the time when a single photon reaches the receiver (200) and the detection time when the receiver (200) detects a single photon. Specific configurations for the above-mentioned techniques are already well known in this technical field.

In one embodiment, the single photon detector is configured to operate only when an enable signal input to the detection device (260) is in a specific logic state (e.g., logical high). And a predetermined reference timing signal (Srt) can be provided as the enable signal. The generation cycle of a series of pulses included in the reference timing signal (Srt) may be the same as the generation cycle of qubits generated by the sender (100).

The public channel (400) is used as a communication channel used by the sender (Alice) and the receiver (Bob) to publicly compare randomly selected bases or publicly compare parts of generated encryption keys. The public channel (400) may be an existing digital optical transmission channel or a wireless communication channel.

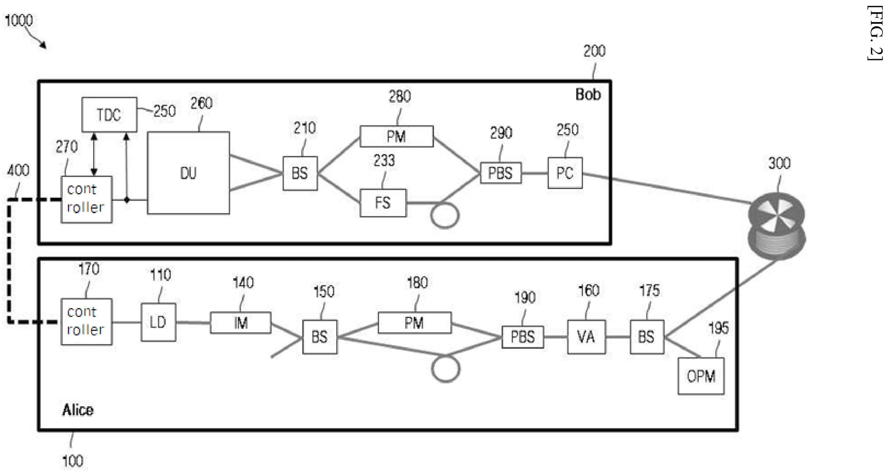

Figure 2 shows a configuration example of a quantum key distribution system provided according to an embodiment of the present invention.

The configuration of the quantum key distribution system (1000) provided according to an embodiment of the present invention is the same as the configuration of the quantum key distribution system (1001) shown in the comparative example of Figure 1, except that the receiver (200) further includes a TDC (250) and a configuration for connecting the TDC (250) to other devices within the receiver (200). Hereinafter, descriptions of contents common to Figure 1 are omitted, and descriptions will focus on the parts that are different from Figure 1.

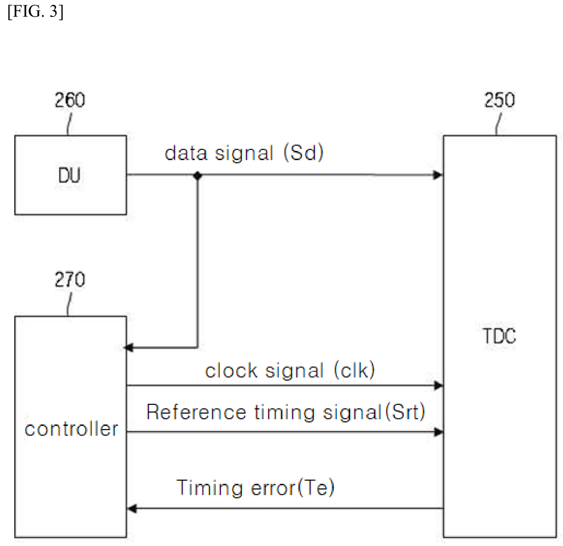

Figure 3 is a diagram for explaining the interaction of the TDC, detection device, and receiver-side control unit shown in Figure 2.

The TDC (250) can receive a data signal (Sd) output by the detection device (DU) (260). The data signal can also be provided to the receiver-side control unit (270).

The TDC (250) can receive the reference timing signal (Srt) prepared and provided by the receiver-side control unit (270). The reference timing signal (Srt) may be a pulse train having the same period as the generation cycle of qubits generated by the sender (100) or a pulse train signal synchronized with the generation cycle of the qubits.

The TDC (250) can provide the receiver-side control unit (270) with a timing error (Te) value, which is information capable of determining whether the synchronization state between the data signal (Sd) and the reference timing signal (Srt) is constantly maintained.

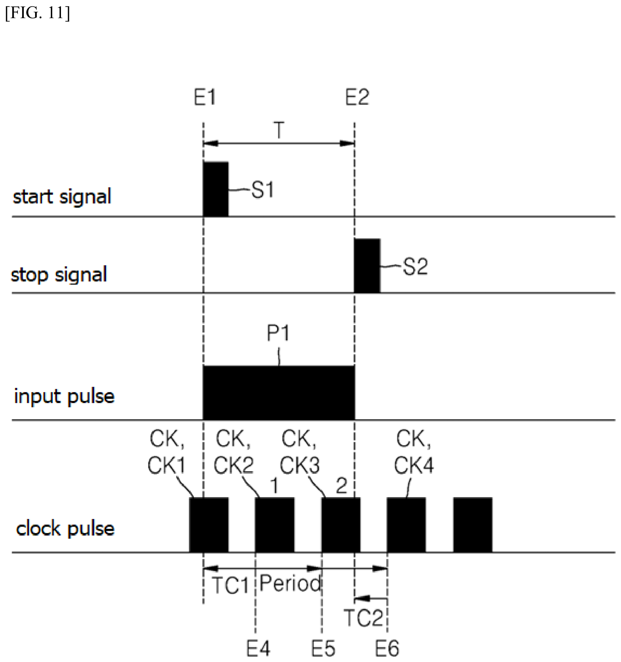

In order to generate the timing error (Te), the TDC (250) may additionally use a clock signal (clk) provided by the receiver-side control unit (270). An example of the clock signal (clk) is illustrated in Figure 11, which will be described later.

The data signal (Sd) and the reference timing signal (Srt) both have a pulse train form. If there is no eavesdropper (Eve) in the quantum channel (300), the pulses included in the data signal (Sd) maintain synchronization with the pulses included in the corresponding reference timing signal (Srt). That is, for example, if the time difference between the rising edge of the first pulse included in the data signal (Sd) and the rising edge of the first pulse of the corresponding reference timing signal (Srt) is ΔT1, the time difference between the rising edge of any other second pulse included in the data signal (Sd) and the rising edge of the second pulse of the corresponding reference timing signal (Srt) is also ΔT1.

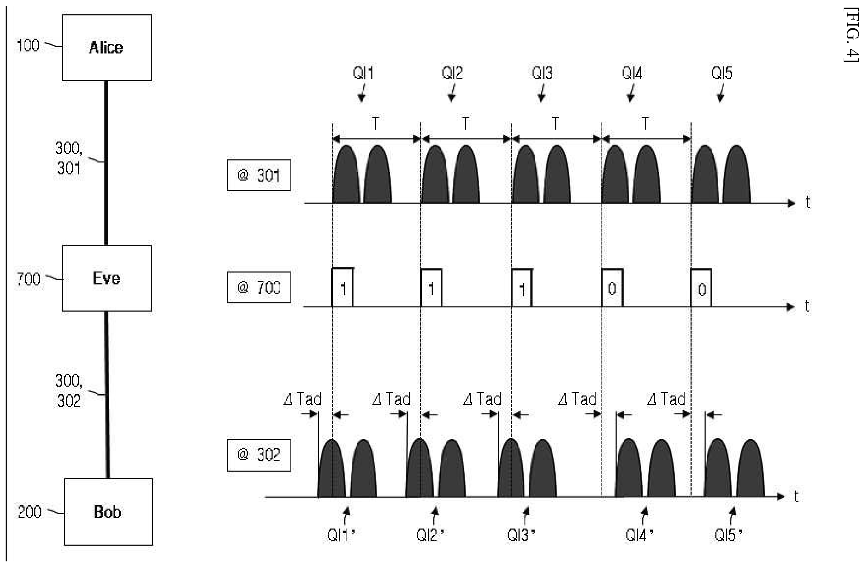

However, if an eavesdropper (Eve) exists in the quantum channel (300), the pulses included in the data signal (Sd) and the pulses included in the reference timing signal (Srt) may deviate from the synchronized state (the specific reason will be described later in Figure 4). That is, for example, if the time difference between the rising edge of the first pulse included in the data signal (Sd) and the rising edge of the first pulse of the corresponding reference timing signal (Srt) is ΔT1, any

The time difference between the rising edge of another second pulse in the data signal and the rising edge of the corresponding second pulse of the reference timing signal (Srt) may be ΔT1 or different ΔT2 or ΔT3. Figure 4 shows a situation where an eavesdropper present in the quantum channel of a quantum key distribution system intercepts qubits sent by the sender (Alice) to the receiver (Bob), performs measurements of their choice, and then sends qubits in a state advantageous to the eavesdropper (Eve) to the receiver (Bob).

Figure 4 illustrates five quantum signals (QI1~QI5) transmitted by the sender (100) through the quantum channel (300).

The eavesdropper (700) can intrude into the quantum channel (300) and block the quantum signal transmitted by the sender (100) so that it does not reach the receiver (200).

The eavesdropper (700) can measure the quantum signals transmitted by the sender (100) and retransmit quantum signals regenerated according to rules set by the eavesdropper (700) to the receiver (200). At this time, the regenerated quantum signals are regenerated based on the quantum signals measured by the eavesdropper (700), and the regeneration rules may be set by the eavesdropper (700). That is, the eavesdropper (Eve) (700) can perform an attack (time shift attack) that arbitrarily adjusts the delay of signal generation to a higher efficiency by using efficiency mismatch of a single photon detector (single photon detector).

In the example of Figure 4, it is shown that the qubits indicated by the quantum signal (QI1), quantum signal (QI2), quantum signal (QI3), quantum signal (QI4), and quantum signal (QI5) detected by the eavesdropper (700) through the quantum channel (301) are determined to be 1, 1, 1, 0, and 0, respectively. The eavesdropper (700) can retransmit the regenerated quantum signals (QI1'~QI5') to the receiver (200) according to the determined qubits and the basis selected by itself.

The graph (@700) in the center right of Figure 4 is a graph showing the timing at which the eavesdropper (700) detected the quantum signals input to the eavesdropper (700) through the quantum channel (301) in pulse form.

Since the quantum signals (QI1~QI5) transmitted by the sender (100) are generated at a constant generation interval T, the eavesdropper (700) detects the quantum signals at a constant time interval T. However, the eavesdropper (700) does not fix the generation interval of the quantum signals (QI1'QI5') regenerated by itself to T. That is, while the generation interval of the quantum signals (QI1QI5) transmitted by the sender (100) may be a fixed value T, the generation interval of the quantum signals (QI1'~QI5') retransmitted by the eavesdropper (700) may not be a fixed value. The variation in the generation interval of the quantum signals (QI1'~QI5') retransmitted by the eavesdropper (700) may be intentional by the eavesdropper (700). For example, the difference in generation time of two consecutive quantum signals retransmitted by the eavesdropper (700) may be T, or T+2*Δ*Tad, T-2**ΔTad*,* or other values.

Here, ΔTa may be a very small value compared to T. Therefore, in order to find out that there is a variation in the reception time interval of the quantum signals (QI1'~QI5') received by the receiver (200),

the receiver (200) must use a very precise timing measurement device. In Figure 4, although the difference in generation interval between the quantum signals (QI1'~QI5') retransmitted by the eavesdropper (700) is visually clear, this may be exaggerated for convenience of explanation. Even if ΔTad is a very small value compared to T, the state of the quantum signal determined when the receiver's (200) detection device (260) measures a certain quantum signal at time t1, and the state of the quantum signal determined when measured at time t1+ΔTad or t1-ΔTad may be different from each other.

As such, the eavesdropper (700) can intervene in the quantum key distribution system (1000) by stealing quantum signals transmitted by the sender (100) and adjusting the transmission interval of the quantum signals to retransmit the regenerated quantum signals to the receiver (200).

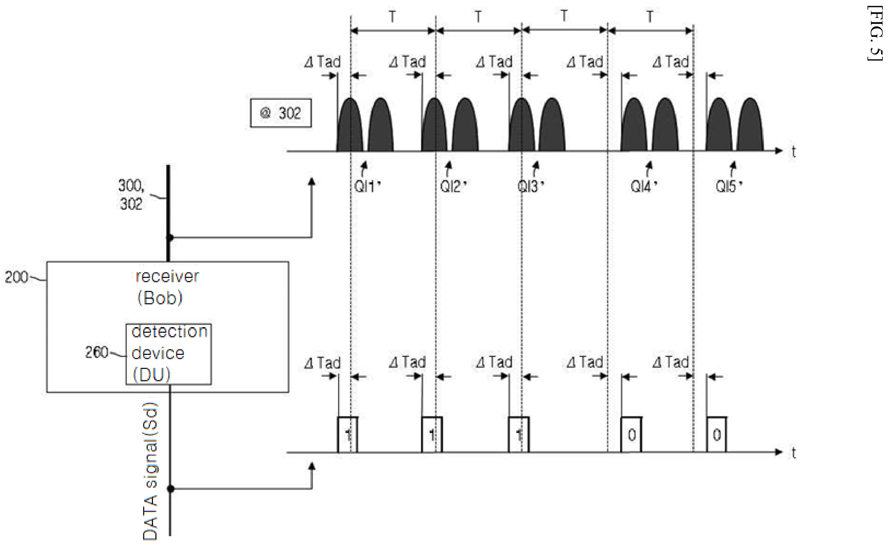

Figure 5 shows an example of a data signal generated by the detection device of the receiver device when the detection device of the receiver device detects quantum signals retransmitted by an eavesdropper.

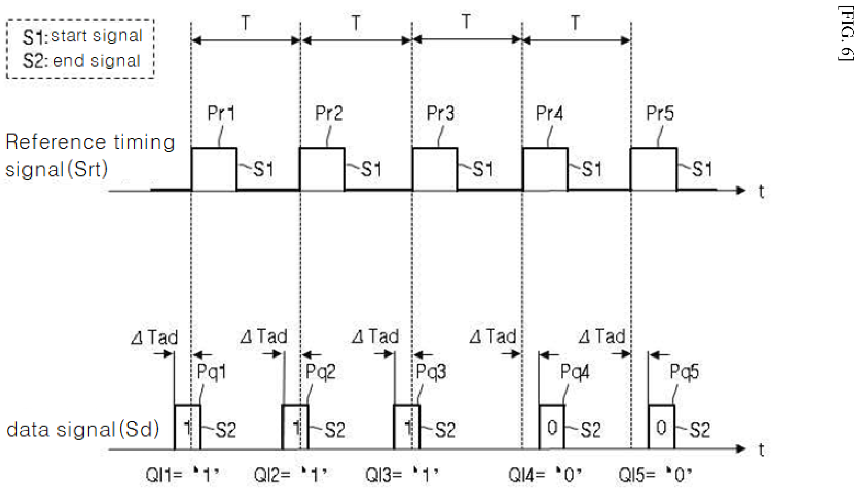

The detection device (260) can output detection information at the reception time of the quantum signals (QI1'~QI5') retransmitted by the eavesdropper (700) through the quantum channel (302), and the detection information can be provided as pulses of the data signal (Sd) output by the detection device (260). In the example shown in Figure 5, because the time intervals between the received quantum signals are not synchronized with a predetermined reference timing signal (shown in Figure 6) having a constant period, the intervals between pulses of the data signal (Sd) are also not fixed to a value T. That is, the time difference between the rising edge of an arbitrarily selected encoding pulse in the data signal (Sd) and the rising edge of the reference pulse of the reference timing signal corresponding to the selected encoding pulse is not fixed to a constant value for each pulse.

Figure 6 illustrates a concept of measuring the time difference between pulses of a predetermined reference timing signal provided by the receiver's control unit and pulses of a data signal output by the detection device, in the receiver's TDC according to an embodiment of the present invention.

As described above, the receiver-side control unit (270) of the receiver (200) can prepare a reference timing signal (Srt) composed of pulses having a constant time interval and provide it to the TDC (250). In this specification, each pulse of the reference timing signal (Srt) is referred to as a reference pulse.

Also, the detection device (260) of the receiver (200) can provide a data signal (Sd) to the TDC (250). As shown in Figure 5, if an eavesdropper (700) exists in the quantum channel (200), the time interval of the pulses included in the data signal (Sd) may not be constant. In this specification, each pulse of the data signal (Sd) is referred to as an encoding pulse.

The TDC (250) provided according to an embodiment of the present invention is configured to measure and output the difference in generation time between a start signal and an end signal input to the TDC (250). In one embodiment, the start signal is each reference pulse, and the end signal is each encoding pulse. To this end, as shown in Figure 3, the TDC (250) can be

reference pulses exist at constant reference time intervals (T), but encoding pulses in the data signal (Sd) may not exist for more than twice the reference time interval (T). This is because even if the sender (100) transmits photon signals, some photon signals may not be output from the sender (100) due to realistic factors of the sender's (100) device, and photon signals that were moving in the quantum channel (300) may be lost due to environmental influences. In Figure 6, it is shown that all five photon signals continuously transmitted by the sender (100) were detected by the eavesdropper (700), and all photon signals retransmitted by the eavesdropper (700) were detected by the receiver (200).

The example shown in Figure 6 shows the case where all photons intended for transmission by the sender are transmitted and detected, which is an example presented for convenience of explanation. In an actual environment, measurement efficiency is very low due to quantum efficiency, and there is a high possibility of loss occurring in the photon generation and transmission process using lasers.

As shown in Figure 6, the rising edge of the first reference pulse (Pr1) of the reference timing signal (Srt) is delayed by ΔTad compared to the rising edge of the first encoding pulse (Pq1) of the data signal (Sd). And the rising edge of the second reference pulse (Pr2) is delayed by ΔTad compared to the rising edge of the second encoding pulse (Pq2). And the rising edge of the third reference pulse (Pr3) is delayed by ΔTad compared to the rising edge of the third encoding pulse (Pq3). And the rising edge of the fourth reference pulse (Pr4) is ahead by ΔTad compared to the rising edge of the fourth encoding pulse (Pq4). And the rising edge of the fifth reference pulse (Pr5) is ahead by ΔTad compared to the rising edge of the fifth encoding pulse (Pq5).

That is, the generation times of the five encoding pulses shown in Figure 6 are each ahead by +ΔTad, +ΔTad, +ΔTad, -ΔTad, -ΔTad compared to the generation times of the five corresponding reference pulses.

That is, when an eavesdropper (700) is present in the quantum channel (300), the values regarding the time difference between the generation times of the encoding pulses included in the data signal (Sd) output by the detection device detecting quantum signals and the generation times of the reference pulses included in the predetermined reference timing signal (Srt) have a variance that is not 0.

In contrast, if there is no eavesdropper (700) in the quantum channel (300), it can be understood that the variance of the values regarding the time difference between the generation times of the encoding pulses included in the data signal (Sd) output by the detection device detecting quantum signals and the generation times of the reference pulses included in the predetermined reference timing signal (Srt) is theoretically 0.

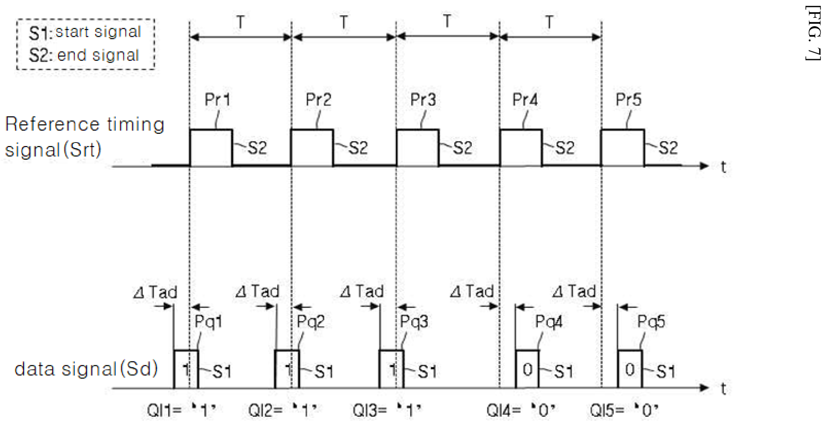

Figure 7 illustrates a situation where the roles of the start signal and the end signal are reversed in the configuration shown in Figure 6.

In Figure 7, the start signal is each encoding pulse, and the end signal is an embodiment in which each is a reference pulse.

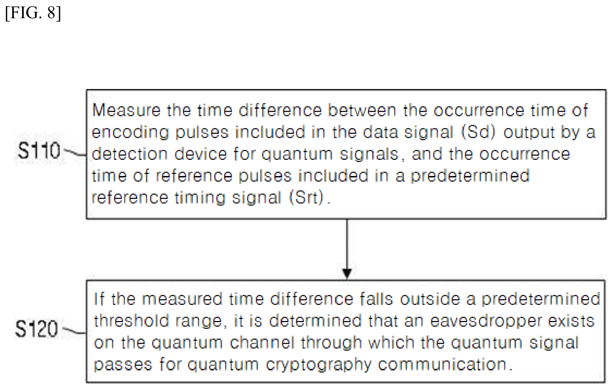

Figure 8 is a flowchart illustrating a method for determining the presence of an eavesdropper on a quantum channel provided according to an embodiment of the present invention.

In step (S110), the TDC (250) of the receiver (200) can measure the time difference between the generation time of the first encoding pulse included in the data signal (Sd) output by the detection device (260) of the receiver (Bob) (200) and the generation time of the first reference pulse included in the predetermined reference timing signal (Srt).

The reference timing signal (Srt) may be a pulse train having the same period as the generation cycle of qubits generated by the sender (100) or a pulse train signal synchronized with the generation cycle of the qubits.

The reference timing signal (Srt) may be a pulse train signal having the same period as the generation cycle of quantum signals transmitted by the sender (100).

In one embodiment, the time difference may be the time difference between the rising edge of the first encoding pulse and the rising edge of the first reference pulse.

Herein, the first encoding pulse may be an encoding pulse closest to the first reference pulse in the time axis among a plurality of encoding pulses included in the data signal (Sd).

Herein, the first reference pulse may be a reference pulse closest to the first reference encoding pulse in the time axis among a plurality of reference pulses included in the reference timing signal (Srt).

In step (S120), if the measured time difference deviates from a predetermined threshold range, the receiver-side control unit (270) of the receiver (200) can determine that an eavesdropper is present on the quantum channel through which the quantum signal passes for quantum cryptography communication.

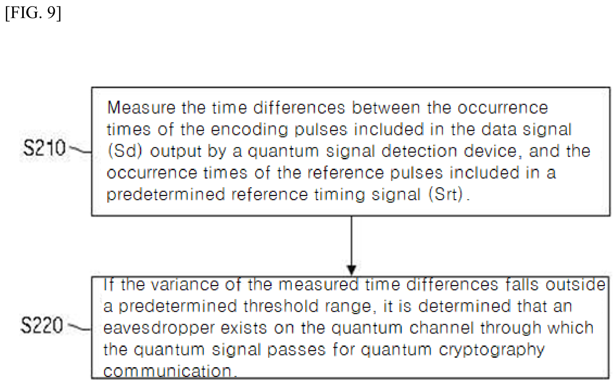

Figure 9 is a flowchart illustrating a method for determining the presence of an eavesdropper on a quantum channel provided according to another embodiment of the present invention.

In step (S210), the TDC (250) of the receiver (200) can measure the time differences between the generation times of the encoding pulses included in the data signal (Sd) output by the detection device (260) of the receiver (Bob) (200) and the generation times of the reference pulses included in the predetermined reference timing signal (Srt).

In step (S220), if the variance of the measured time differences deviates from a predetermined threshold range, the receiver-side control unit (270) of the receiver (200) can determine that an eavesdropper is present on the quantum channel through which the quantum signal passes for quantum cryptography communication.

For example, in one embodiment, if the variance of the measured time differences is substantially 0, it is determined that no eavesdropper is present, and if the variance is substantially greater than 0, it is determined that an eavesdropper is present.

In another embodiment, if the variance of the measured time differences is less than δ, it is determined that no eavesdropper is present, and if the variance is substantially greater than δ, it can be determined that an eavesdropper is present (where δ>0).

Hereinafter, the operating principle of the TDC (250) provided according to an embodiment of the present invention will be described in detail. The TDC (250) is implemented by an FPGA (1). Alternatively, in other embodiments, the TDC (250) may be implemented as IC or ASIC, etc.

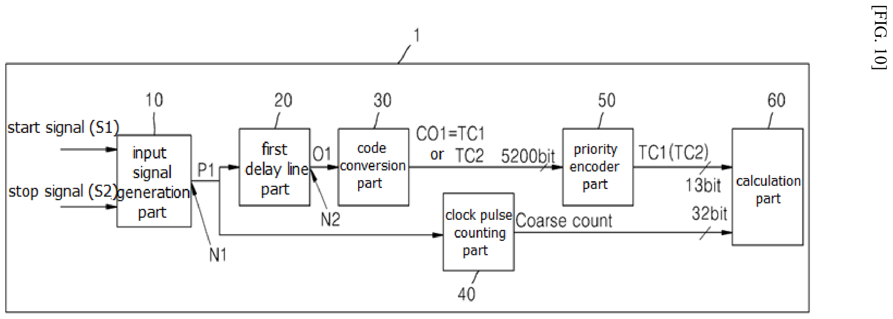

Figure 10 shows a configuration diagram of an FPGA implementing the TDC according to an embodiment of the present invention.

If the receiver-side control unit (270) shown in Figure 2 is an FPGA, the FPGA (1) implementing the TDC (250) may be the receiver-side control unit (270).

Alternatively, if the receiver-side control unit (270) shown in Figure 2 is not an FPGA, the TDC (250) may be implemented as an FPGA provided separately from the receiver-side control unit (270).

The TDC (250) is not a high-speed FPGA operating with, for example, a 10GHz clock, but may be implemented as a relatively low-speed FPGA operating with, for example, a 100~300Mhz clock.

Figure 11 is a diagram for explaining an input pulse input to the first delay line part of the FPGA according to an embodiment of the present invention.

Hereinafter, Figures 10 and 11 will be described together with reference to them.

The FPGA (1) may include an input signal generation part (10), a first delay line part (20), a code conversion part (30), a clock pulse count part (40), a priority encoder part (50), and a calculation part (60).

Specifically, the configurations of the FPGA (1) described above may be the configurations of a TDC (Time to Digital converter).

As shown in Figures 10 and 11, the input signal generation part (10) can generate an input pulse (P1) having a width equal to the generation time difference (T) between the rising edge (E1) of a predetermined given start signal (S1) and the rising edge (E2) of a predetermined given end signal (S2). The input signal generation part (10) may be configured with logic gates necessary for the generation.

The first delay line part (20) can receive the input pulse (P1) having a width equal to the generation time difference (T) between the start signal (S1) and the end signal (S2). And the first delay line part (20) can output a thermometer code (Thermometer code) (O1). At this time, the thermometer code is a value of, for example, 8 bits composed of output values of flip-flops (flip flop) included in the first delay line part (20), and each output value of the flip-flops can be referred to as an element of the thermometer code.

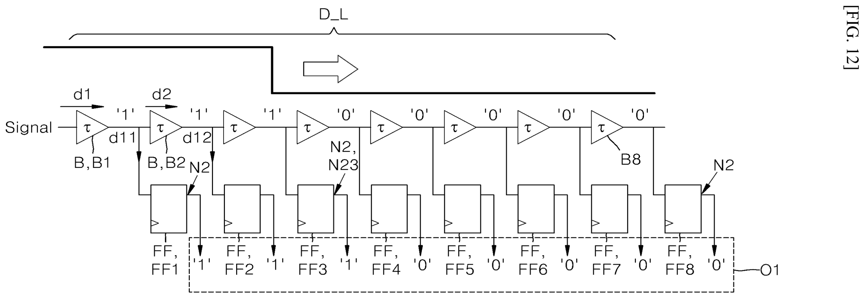

Figure 12 shows a configuration of the first delay line part according to an embodiment of the present invention.

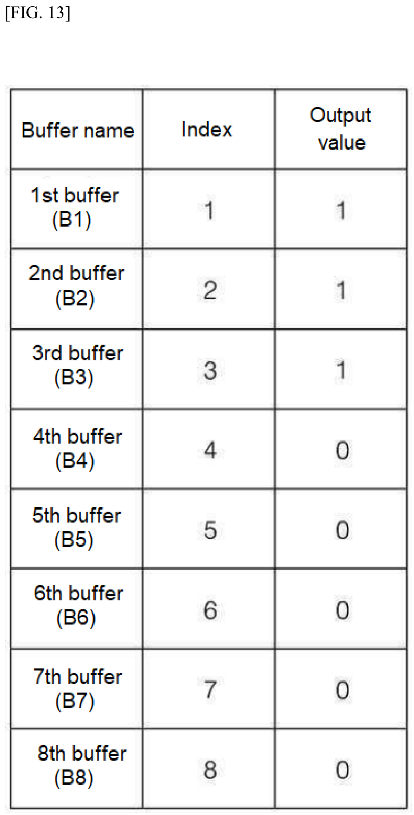

Figure 13 is a diagram for explaining the indices of the buffers in Figure 12.

The first delay line part (20) includes a delay line (D_L) including a plurality of buffers (delay elements, delay elements) (B) and D-flip-flops (FF) tapped at the output terminal of each buffer (B) of the delay line.

The plurality of buffers may be connected in a cascade delay method. That is, the plurality of buffers may be arranged in the order in which the input pulse (P1) flows.

The waveform (Signal) of the input pulse (P1) of Figure 12 can be output from the output terminal of each buffer (B) with a predetermined delay. That is, the output value of the first buffer (B1) is output with a predetermined delay from the output terminal of the first buffer (B1), and the output terminal of the first buffer (B1) is connected to the input terminal of the second buffer (B2). The output value (e.g., '1') of the first buffer (B1) can also be input to the first flip-flop (FF1).

At this time, data path delay may occur between each buffer (B) and while passing through the flip-flops (FF). For example, a delay of d1 may occur until the input value ('1') of the first buffer (B1) is delivered to the second buffer (B2), and a delay of d11 may occur until the output value ('1') of the first buffer (B1) is delivered to the first flip-flop (FF1). Similarly, delay occurs each time data is transferred from the previous buffer to the next buffer, and delay occurs each time data is transferred from an arbitrary buffer to the flip-flop connected to the arbitrary buffer.

Figure 13 is a diagram for explaining the indices of buffers according to an embodiment of the present invention.

Each field in the table of Figure 13 shows the buffer name, index, and buffer output value.

An index defining the order of each buffer can be assigned to each buffer. For example, index '1' is assigned to the first buffer (B1), index '2' is assigned to the second buffer (B2), and similarly index '8' is assigned to the eighth buffer (B8). When each buffer (B) is arranged according to the order in which the input pulse (P1) flows and indices are arranged according to that order, for example, each index from 1 to 1000 can be assigned to 1000 buffers.

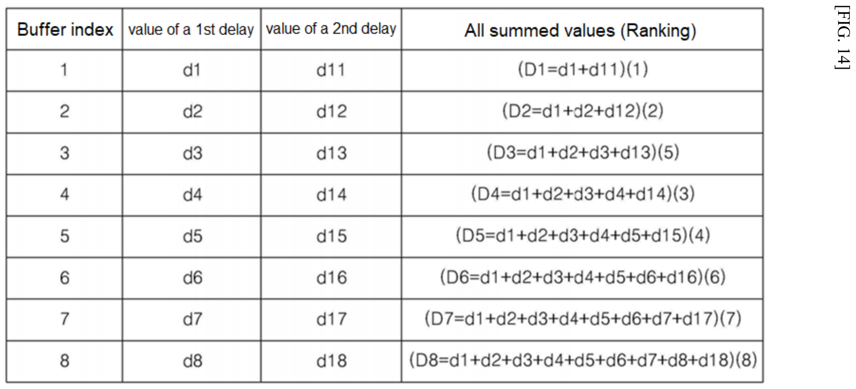

Figure 14 is a table for explaining data path delays.

Referring to Figures 10 and 14, the code conversion part (30) converts and outputs the order of elements of the thermometer code (01) (e.g., 11100000) output from the first delay line part (20) (e.g., 1, 2, 3, 4, 5, 6, 7, 8). At this time, the code (e.g., 11010000) output by the code conversion part (30) (the order of indices of the corresponding buffers is 1, 2, 4, 5, 3, 6, 7, 8) is referred to as 'converted code (CO1)'.

The converted code (CO1) output by the code conversion part (30) may be obtained by arranging the order of elements of the thermometer code (01) according to a predetermined reference. At this time, the predetermined reference is the data path delay from the output node (N1) of the input pulse (P1) to each output node (N2) of the plurality of flip-flops (FF) included in the first delay line part (20). This will be explained in detail with reference to Figure 14.

Each field in the table shows the buffer index number, the value of the first delay, the value of the second delay, and the sum value (rank). At this time, the rank can represent the rank for all sum values. At this time, the rank may have the buffer with the smallest sum value ranked 1st, and the buffer with the highest sum value ranked last. Alternatively, the opposite may be possible in other embodiments.

As described above in Figure 12, the sum value is the time it takes for data to be delivered from the node (N1) where the input pulse (P1) is output to an arbitrary flip-flop (e.g., FF4).

The first delay, which is the time it takes for the input value of an arbitrary buffer to be delivered to another buffer connected in series to the arbitrary buffer, and the second delay, which is the time it takes for the output value of the arbitrary buffer to be delivered to the input of the flip-flop connected to the arbitrary buffer, may occur.

At this time, the value obtained by adding the value of the first delay and the value of the second delay for each buffer can be referred to as the data path delay.

Referring to Figure 12 and Figure 14 together, when the indices of each buffer are listed in order, the rank of the sum value of the value of the first delay and the value of the second delay may be different from the rank of the index number of each buffer. For example, in the case of the third buffer, the buffer array rank is 3rd, so the index number is '3', but the rank of the sum value may be '5'. Looking closely, to deliver data to the third flip-flop (FF3), it is necessary to pass through the first buffer (B1), the second buffer, and the third buffer. At this time, predetermined delays (d1, d2, d3) occur each time the first buffer (B1), the second buffer (B2), and the third buffer (B3) are passed, and a delay (d13) also occurs until the data output from the third buffer (B3) is output as the output value of the third flip-flop (FF3). That is, the delay until data is delivered from the output node (N1) of the input pulse (P1) to the output node (N2, N23) of the third flip-flop (FF3) is a value obtained by summing d1, d2, d3, and d13.

In this way, the delay (i.e., sum value) until data is delivered to the output node of each flip-flop (FF3) can be calculated.

For example, in this embodiment, the buffer index for the third flip-flop (FF3) is 3, and the buffer index for the fourth flip-flop (FF4) is 4. That is, the fourth flip-flop (FF3) must pass through one more buffer than the third flip-flop (FF4), but despite this, the sum value of the delay to the output node of the third flip-flop with buffer index 3 may be larger.

The code conversion part (30) can convert the order of elements of the thermometer code (01) based on the calculated delay (sum value) (e.g., from the order with the smallest sum value).

The converted code (CO1) output by the code conversion part (30) can be provided to the priority encoder part (50).

The priority encoder part (50) can digitize a long thermometer code. For example, the priority encoder part (50) can convert a 5200-bit thermometer code into a 13-bit thermometer code. For example, if there are 5200 buffers (delay elements) (B) and flip-flops (FF) connected to the buffers as described above in Figure 12, a series of 5200 consecutive binary numbers are output, which can be represented by a 13-bit binary number.

That is, the priority encoder part (50), as the time-dependent output value (CO1) of the code conversion part (30), can express the 5200-bit first thermometer code (TC1) and the second thermometer code (TC2) in 13-bit binary numbers.

Referring to Figure 11, the first thermometer code (TC1) may be a code output by the code conversion part (30) in relation to the rising edge of the clock pulse (CK2) that first occurred after the rising edge (E1) of the input pulse (P1) among the generated clock pulses (CK). The 13-bit represented first thermometer code (TC1) can be provided as an input to the calculation part (60).

And the second thermometer code (TC2) may be a code output by the code conversion part (30) in relation to the rising edge (E6) of the clock pulse (CK4) that first occurred after the falling edge (E2) of the input pulse (P1) among the generated clock pulses (CK). The 13-bit represented second thermometer code (TC2) can be provided as an input to the calculation part (60).

At this time, the time interval of the first thermometer code (TC1) and the time interval of the second thermometer code (TC2) may be smaller than the period (Period) of the clock pulse (CK).

Referring again to Figures 10 and 11, the clock pulse count part (40) can receive the input pulse (P1) from the input signal generation part (10).

The clock pulse count part (40) can count the number of clock pulses (CK) generated during the sustainment period (T) of the input pulse (P1). For example, in Figure 11, since the rising edges of clock pulses generated during the ON state period of the input pulse (P1) are two, such as edges (E4, E5), the counted value may be 2.

The output value (Coarse count) of the clock pulse count part (40), that is, the counted value, can be provided to the calculation part (60).

Referring to Figures 10 and 11, the calculation part (60) uses the first thermometer code (TC1), the second thermometer code (TC2), and the counted number of clock pulses to determine the value of the generation time difference. For example, the generation time difference may be 2*Period+TC1-TC2.

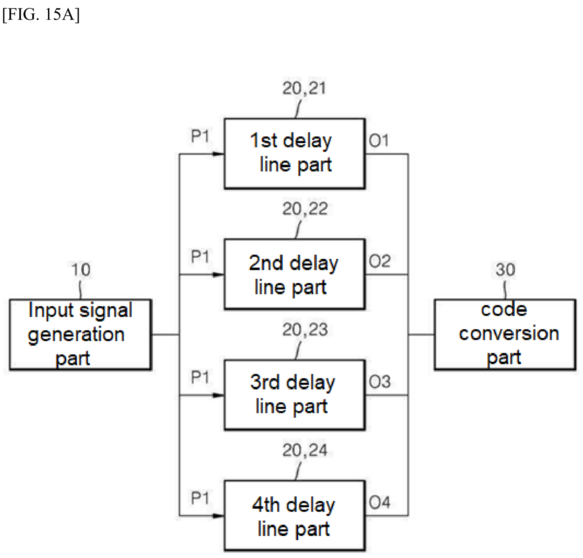

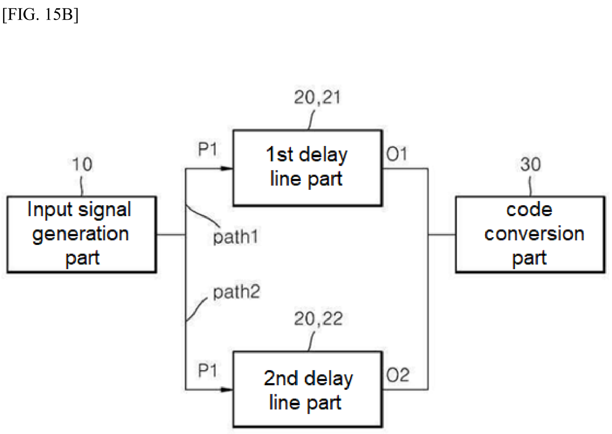

Figures 15a and 15b are diagrams illustrating a parallel configuration of a plurality of delay line parts according to an embodiment of the present invention.

As shown in Figure 15a, the delay line part (20) may be connected in parallel in pairs or more. At this time, the input pulse (P1) output from the input signal generation part (10) may be input to the first delay line part (21), the second delay line part (22), the third delay line part (23), and the fourth delay line part (24), respectively. And the first thermometer code (O1), the second thermometer code (O2), the third thermometer code (O3), and the fourth thermometer code (04) output from the first delay line part (21), the second delay line part (22), the third delay line part (23), and the fourth delay line part (24) may be input to the code conversion part (30).

As shown in Figure 15b, it can be assumed that two delay line parts (20) are connected in parallel in pairs.

For example, the input pulse (P1) output from the input signal generation part (10) is the first path where the output terminal of the input signal generation part (10) and the input terminal of the first delay line part (21) are connected to each other.

(path1) and the second path (path2) where the output terminal of the input signal generation part (10) and the input terminal of the second delay line part (22) are connected to each other can be provided respectively. At this time, the time it takes for the input pulse (P1) output from the input signal generation part (10) to reach the input terminals of the first delay line part (21) and the second delay line part (22) may be different from each other. This is because there is an input delay due to the difference in length between the first path (path1) and the second path (path). In the embodiment of Figure 15a, since the length of the first path (path1) is shorter than the length of the second path (path2), the input time interval of the input pulse (path1) through the first path (path1) is known to be smaller than the input time interval of the input pulse (path2) through the second path (path2).

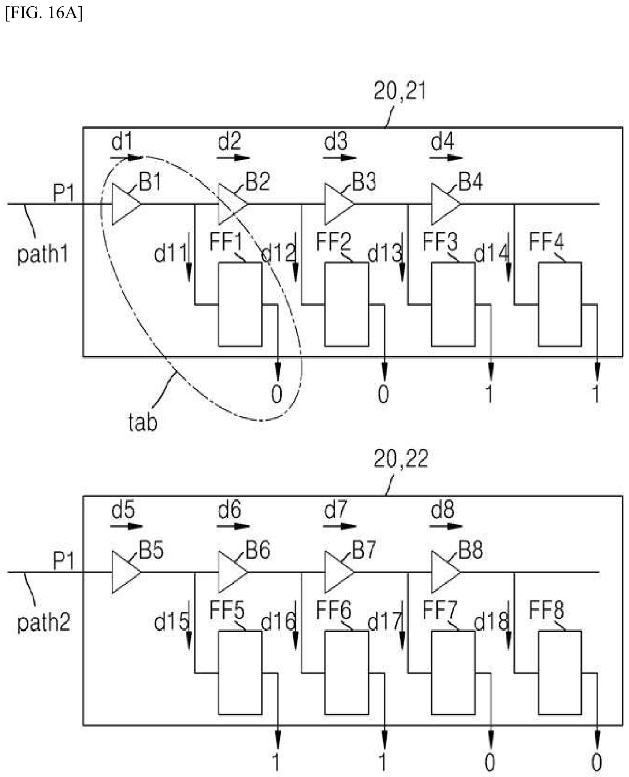

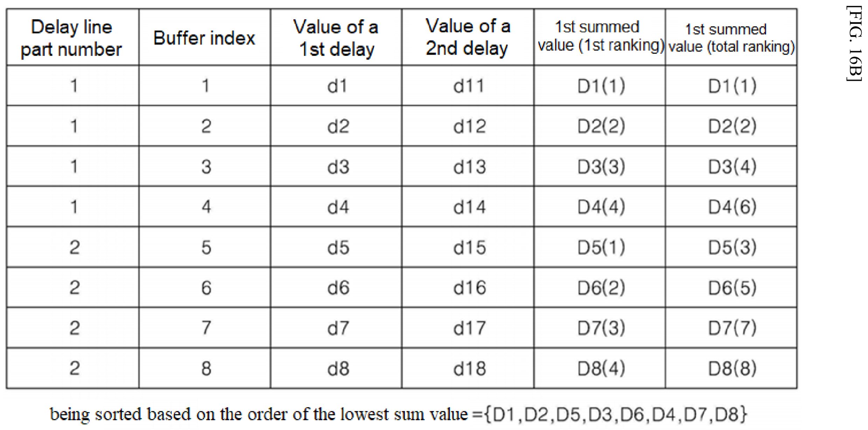

Figure 16a shows a configuration of the first delay line part and the second delay line part of Figure 15b, and Figure 16b is for explaining the operation of the code conversion part when two delay line parts are used according to an embodiment of the present invention.

In Figure 16a, for convenience of explanation, it is illustrated that each delay line part includes 4 buffers and flip-flops each.

Each field in the table in Figure 16b shows the delay line part number, buffer index number, value of the first delay, value of the second delay, first sum value (first rank), and first sum value (overall rank). At this time, the first rank can represent the rank for each sum value for the buffer index of the buffers within each delay line part. And the overall rank can represent the rank for each sum value for the buffer indices of all buffers of the first delay line part and the second delay line part. At this time, the first rank and overall rank may have the buffer with the smallest sum value ranked 1st and the buffer with the highest sum value ranked last. Alternatively, the opposite may be possible in other embodiments. The method of calculating the sum value may be the same as described in Figure 10.

The code conversion part (30) may arrange and merge the elements of the thermometer code output by the first delay line part (21) and the sum values of the elements, and the first set in which buffer index pairs are arranged in ascending order of sum value (e.g., {(D1, 1), (D2, 2), (D3, 3), (D4, 4)}), and the elements of the thermometer code output by the second delay line part (22) and the sum values of the elements, and the second set in which index pairs are arranged in ascending order of sum value (e.g., for example, {(D5, 5), (D6, 6), (D7, 7), (D8, 8)}).

That is, each element of the first set and each element of the second set can be arranged based on the order of ascending sum values.

For example, in the first delay line part (21), the output value based on the buffer index may be {1, 2, 3, 4}, and in the second delay line part (22), the output value based on the buffer index may be {5, 6, 7, 8}. And in the embodiment of Figures 15b and 16a, the delay (d1) may be smaller than the delay (d5). Therefore, the sorted order may be like (D1, 1), (D2, 2), (D5, 5), (D3, 3), (D6, 6), (D4, 4), (D7, 7), (D8, 8). The output values of the flip-flops for each buffer index can be arranged in the sorted order. For example, the sorted value (buffer index) may be 0(1), 0(2), 1(4), 1(6), 1(3), 1(5), 0(7), 0(8).

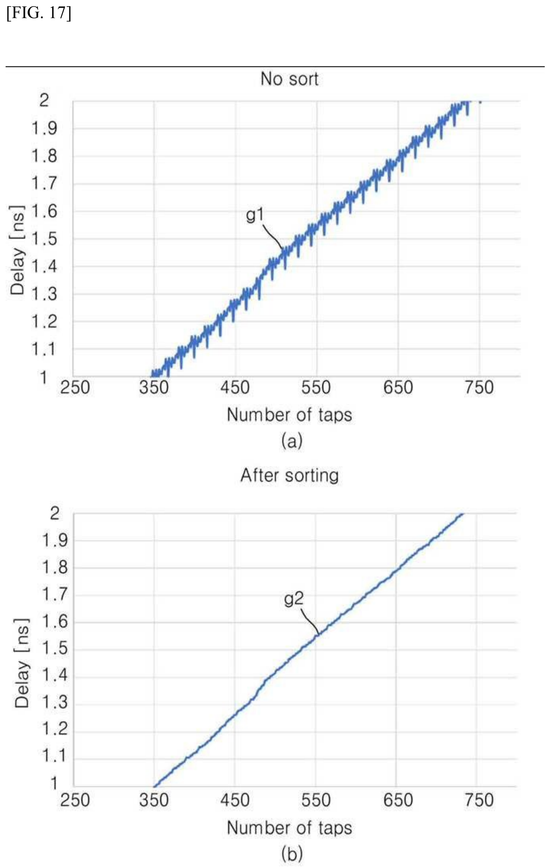

As described above, when a plurality of delay line parts (20) are used, slightly different input delays may occur depending on the arrangement. Figure 17 described below shows the delay according to the arrangement when a plurality of delay line parts are used.

Figure 17 is a graph of delay according to whether or not the code conversion part is applied according to an embodiment of the present invention.

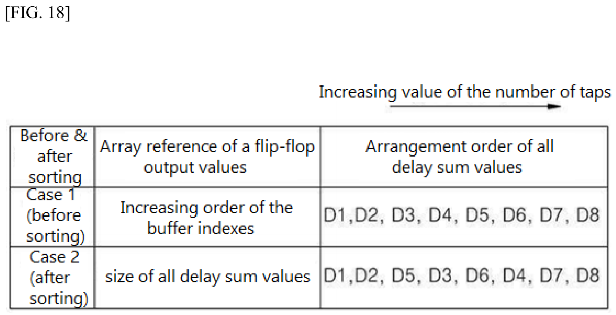

Figure 18 is a diagram for explaining the array criteria of flip-flop output values and the increase value of the number of taps in Figure 17 according to an embodiment of the present invention.

Figure 17(a) shows a delay graph according to the number of taps in a state where the code conversion part (30) is not applied, and Figure 17(b) shows a delay graph according to the number of taps in a state where the code conversion part (30) is applied.

The fields in the table of Figure 18 include pre-sorting and post-sorting, array criteria of flip-flop output values, and array order of overall delay sum values.

Hereinafter, Figures 17 and 18 will be described together with reference to them.

The horizontal axis of the graphs (g1, g2) represents the number of taps (Number of taps). Referring to Figure 16b, one tap may mean a pair of one buffer (delay element) (e.g., B1) and a flip-flop (FF1) connected thereto. For example, if the total number of buffer and flip-flop pairs is 1000, the total number of taps may be 1000.

The vertical axis of the graphs (g1, g2) represents delay time (ns). The delay time may mean the sum of delays until data is delivered to the output node of the flip-flop tapped in each buffer described above in Figure 14.

Referring to Figures 16a to 18 together, in graph (g1), the increase in the number of taps may mean, for example, an increase in buffer index. For example, when the number of taps is 4 on the horizontal axis of graph (g1), it may mean buffer index 4. At this time, the delay value, which is the vertical axis of graph (g1), may be D4(=d1+d2+d3+d4+d14) as shown in Figure 16b. For example, when the number of taps is 5, it may mean buffer index 5. At this time, the delay value, which is the vertical axis of graph (g1), may be D5(=d5+d15) as shown in Figure 16b. At this time, referring to Figure 18, D4>D5 may be. Here, the delay observed at the flip-flop of each tap is not that the delay of the tap increases as the index of the tap (e.g., index 4 -> index 5) increases, but it can be seen that even if the index of the tap increases, it may locally decrease.

On the other hand, in graph (g2), the increase in the number of taps does not mean an increase in buffer index, but rather an increase in position in the sorted order of the output values of each flip-flop by the code conversion part (30) in the sorted state. For example, when the number of taps is 4 on the horizontal axis of graph (g2), the positional order of the sorted buffer indices may be 1, 2, 5, 3, meaning buffer index 3. And in this case, the delay value, which is the vertical axis of graph (g2), may be D3(=d1+d2+d3+d13). For example, when the number of taps is 5, the positional order of the sorted buffer indices may be 1, 2, 5, 3, 6, meaning buffer index 6. And this

In this case, the delay value may be D6(=d5+d6+d16). At this time, referring to Figure 18, D3<D6 may be. That is, as shown in Figure 17(a), in the case where the code conversion part (30) of the present invention is not applied, it can be seen that the graph (g1) regarding the delay according to the increase in the number of taps does not achieve a monotonically increasing property. On the other hand, in the case where the code conversion part (30) of the present invention is applied as shown in Figure 17(b), it can be seen that the graph (g2) regarding the delay according to the increase in the number of taps achieves a non-decreasing increase trend.

For example, unlike ASIC, which is a custom semiconductor, FPGA, which can be directly designed through programming, can change the chip's function according to programming. Therefore, unlike ASIC, the function of each component included in the FPGA may be different (or depending on the arrangement of components), so when the number of taps increases, the delay may not always increase, but there are cases where it decreases, so it is not possible to achieve a non-decreasing increase trend.

However, as described above, it can be confirmed through graph (g2) that the code conversion part (30) can correct the monotonically increasing property of the first delay line part (20).

As described above, when a plurality of delay line parts (20) are used, code conversion parts can be used to provide delay alignment. As a result, it is possible to provide a high time resolution TDC that compensates for jitter-induced errors and has high time resolution. For example, in the case of configuring 4 delay line parts in parallel and having a total of 9600 taps, it is possible to provide a TDC having a resolution of 0.8 ps per tap.

Using the above-described embodiments of the present invention, those skilled in the art will be able to easily make various modifications and changes within a scope that does not depart from the essential characteristics of the present invention. The contents of each claim in the claims may be combined with other claims without citation relationship within the scope understandable through this specification.

## Claims

1. A receiver device for a quantum key distribution system, comprising:
a detection device configured to detect a quantum signal detected through a quantum channel and output a data signal corresponding thereto; and
a TDC configured to measure a time difference between a first generation time of a first reference pulse included in a reference timing signal and a second generation time of a first encoding pulse included in the data signal,
wherein the TDC includes:
a delay line part to which an input pulse having a width equal to the time difference is input; and
a code conversion part configured to generate a converted code by arranging elements of a thermometer code output by the delay line part according to a data path delay from an output node of the input pulse to each output node of a plurality of flip-flops included in the delay line part;
and
the receiver device is configured to determine the time difference using the generated converted code, and if the measured time difference deviates from a predetermined threshold range, determine that an eavesdropper is present on the quantum channel.

2. The receiver device for a quantum key distribution system according to claim 1,
wherein the reference timing signal is a pulse train signal synchronized with the quantum signal output by the transmitter device.

3. The receiver device for a quantum key distribution system according to claim 1,
wherein the reference timing signal is a pulse train signal having the same period as the generation cycle of the quantum signal output by the transmitter device.

4. The receiver device for a quantum key distribution system according to claim 1,
wherein the time difference is a time difference between a rising edge of the first encoding pulse and a rising edge of the first reference pulse.

5. The receiver device for a quantum key distribution system according to claim 1,
wherein the first encoding pulse is an encoding pulse closest to the first reference pulse in the time axis among a plurality of encoding pulses included in the data signal.

6. The receiver device for a quantum key distribution system according to claim 1,
wherein the TDC further includes a calculation part configured to determine the time difference using the generated converted code.

7. The receiver device for a quantum key distribution system according to claim 1,
wherein the TDC further includes a second delay line part to which the input pulse is input; and the code conversion part is configured to generate the converted code by arranging and merging the elements of the thermometer code output by the delay line part and the elements of the thermometer code output by the second delay line part according to the data path delay from the output node of the input pulse to each output node of a plurality of flip-flops included in the delay line part and the second

8. The receiver device for a quantum key distribution system according to claim 6,
wherein the TDC is implemented by any one device among FPGA (Field Programmable Gate Array), ASIC (Application Specific Integrated Circuit), and IC (Integrated Circuit), and any one of the devices is programmed to include the delay line part and the calculation part.

9. The receiver device for a quantum key distribution system according to claim 8,
wherein the TDC is configured to use a clock signal having a period shorter than the generation cycle of the quantum signal output by the transmitter device; and
the TDC includes:
an input signal generation part configured to generate the input pulse having a width equal to the time difference between the rising edge generation time of the first reference pulse and the rising edge generation time of the first encoding pulse; and
a clock pulse count part configured to count the number of clock pulses of the clock signal generated during the sustainment period of the input pulse;
and
the calculation part is configured to determine the value of the time difference using a first thermometer code (TC1) output by the code conversion part at the rising edge time of the first clock pulse among the generated clock pulses, a second thermometer code (TC2) output by the code conversion part at the rising edge time of the clock pulse generated immediately after the last clock pulse among the generated clock pulses, and the number of counted clock pulses,
quantum key distribution system receiver device.

10. A receiver device for a quantum key distribution system, comprising:
a detection device configured to detect a quantum signal detected through a quantum channel and output a data signal corresponding thereto; and
a TDC configured to measure time differences between first generation times of first reference pulses included in a reference timing signal and second generation times of first encoding pulses included in the data signal,
wherein the TDC includes:
a delay line part to which an input pulse having a width equal to each of the time differences is input; and
a code conversion part configured to generate a converted code by arranging elements of a thermometer code output by the delay line part according to a data path delay from an output node of the input pulse to each output node of a plurality of flip-flops included in the delay line part;
and
the receiver device is configured to determine the time difference using the generated converted code, and

11. The receiver device for a quantum key distribution system according to claim 10,
wherein the reference timing signal is a pulse train signal having the same period as the generation cycle of the quantum signal output by the transmitter device.

12. The receiver device for a quantum key distribution system according to claim 10,
wherein the generation time of an arbitrarily selected encoding pulse among the first encoding pulses is compared with the generation time of a reference pulse closest to the selected arbitrary encoding pulse in the time axis among the first reference pulses.

13. The receiver device for a quantum key distribution system according to claim 12,
Wherein the TDC further includes a second delay line part to which the input pulse is input; and the code conversion part is configured to generate a converted code by arranging and merging the elements of the thermometer code output by the delay line part and the elements of the thermometer code output by the second delay line part according to the data path delay from the output node of the input pulse to each output node of a plurality of flip-flops included in the delay line part and the second delay line part, quantum key distribution system receiver device.
